# EUROPÄISCHE PATENTSCHRIFT

(11) **EP 3 215 414 B1**
(45) Veröffentlichungstag und Bekanntmachung des Hinweises auf die Patenterteilung: **27.11.2019**
(21) Anmeldenummer: 15775143.9
(22) Anmeldetag: 28.09.2015
(51) Int. Cl.: B62J 7/08, B62J 9/00, B62K 19/46, A45C 13/02, B65D 81/02

(54) **GEPÄCKSYSTEM GEGEN PENDELN**
LUGGAGE SYSTEM FOR ANTI-VIBRATION
SYSTÈME DE BAGAGE ANTI-VIBRATION

(30) Priorität: 06.11.2014 DE 102014222728
(43) Veröffentlichungstag der Anmeldung: 13.09.2017
(73) Patentinhaber: Bayerische Motoren Werke Aktiengesellschaft, 80809 München (DE)
(72) Erfinder: SEIDL, Josef, 84130 Dingolfing (DE)
(86) Internationale Anmeldenummer: PCT/EP2015/072246
(87) Internationale Veröffentlichungsnummer: WO 2016/071043

(56) Entgegenhaltungen:
- WO-A1-2014/005198
- CN-A- 102 358 368
- CN-A- 103 892 553
- CN-A- 104 003 073
- CN-A- 104 015 844
- CN-U- 202 923 777
- DE-A1- 2 501 913
- DE-A1- 10 010 789
- GB-A- 901 507
- GB-A- 985 458
- JP-A- S6 447 689
- KR-A- 20120 010 503
- US-A- 4 574 955
- US-A- 5 114 060
- US-A- 5 909 806
- US-A1- 2010 147 918

## Beschreibung

Die Erfindung betrifft ein Gepäcksystem eines einspurigen Kraftfahrzeugs, insbesondere Motorrades oder Motorrollers, mit einer Entkopplungseinrichtung für Gepäckstücke zur Reduzierung von Pendelbewegungen während der Fahrt.

Aus dem Stand der Technik sind verschiedene Lösungen gegen das Pendeln von Motorrädern im mit Gepäck beladenen Zustand bekannt. Zumeist betreffen die Lösungen aufwendige Konstruktionen bei der Zusammenwirkung der Gepäckstückaufnahmebehälter (Seitenkoffer, Topcase) mit dem Rahmen des Kraftfahrzeugs und zur Vermeidung der Einleitung der durch die Fahrt und insbesondere den Fahrtwind erzeugten Kräfte über die Gepäckstückaufnahmebehälter in den Rahmen. Als Beispiel einer derartigen Ausführung wäre die Offenbarung der Patentanmeldung US 2014091120 A zu nennen.

Weitere Gepäckstückaufnahmebehälter des Stands der Technik sind in den Dokumenten US 5 114 060 A, US 2010/147918 A1, JP S64 47689 A, KR 2012 0010503 A, CN 102 358 368 A, US 5 909 806 A, CN 104 015 844 A, CN 103 892 553 A und CN 202 923 777 U offenbart. Darüber hinaus sind Gepäckstückaufnahmebehälter, bei welchen eine von einem Gepäckstückaufnahmebehälter entkoppelte Wannen verwendet wird, aus den Dokumenten DE 100 10 789 A1, DE 25 01 913 A1, GB 985 458 A, CN 104 003 073 A, GB 901 507 A, US 4 574 955 A und WO 2014/005198 A1 bekannt.

Derartige Systeme sind jedoch sehr aufwendig, kostenintensiv und nicht nachrüstbar. Zudem stören sie den Sozius und Beschränken dessen Bewegungsfreiheit.

Es ist deshalb Aufgabe der Erfindung, ein vereinfachtes, kostengünstigeres und nachrüstbares Gepäcksystem für eine Motorrad oder einen Motorroller bereit zu stellen.

Die erfindungsgemäße Aufgabe wird gelöst durch eine Merkmalskombination gemäß Patentanspruch 1.

Die grundsätzliche erfinderische Idee ist es, das Gepäckstück über eine Entkopplungseinrichtung von dem Gepäckstückaufnahmebehälter zu entkoppeln, so dass die das Pendeln auslösenden Kräfte und die Einwirkung auf das Kraftfahrzeug reduziert werden. Für die Entkopplung werden erfindungsgemäß verschiedene Lösungen vorgesehen.

Erfindungsgemäß wird ein Gepäcksystem gemäß dem geltenden Hauptanspruch vorgeschlagen. Das Gepäcksystem ist für ein einspurigen Kraftfahrzeug (Motorrades oder Motorrollers oder Trikefahrzeug mit zwei Vorder- oder Hinterrädern) geeignet und weist ein an dem Kraftfahrzeug befestigbaren Gepäckstückaufnahmebehälter auf, der im Inneren eine mit einem aufzunehmenden Gepäckstück zusammenwirkende Entkopplungseinrichtung zur zumindest teilweisen Entkopplung von fahrtbedingten Kräften des Gepäckstücks von dem Gepäckstückaufnahmebehälter umfasst. Die Entkopplungseinrichtung erzeugt die Entkopplung des Gepäckstückaufnahmebehälters von dem Gepäckstück, so dass während der Fahrt auf den Gepäckstückaufnahmebehälter wirkende Kräfte nicht durch die Gepäckstücke verstärkt auf das Kraftfahrzeug wirken. Die Fliehkräfte der Gepäckstücke werden von dem Gepäckstückaufnahmebehälter weitestgehend durch verschiedene mögliche Ausführungsvarianten entkoppelt, die nachstehend beschrieben sind.

Erfindungsgemäß ist ein Gepäcksystem vorgesehen, bei dem die Entkopplungseinrichtung durch eine Ausbildung der Innenwand des Gepäckstückaufnahmebehälters als elastische deformierbare Wand mit Hohlräumen, in Sandwichbaubauweise oder Schaumstoff gebildet ist. Die Innenwand des Gepäckstückaufnahmebehälters wird angepasst, dass das aufgenommene Gepäckstück bei Kräften ausweichen und teilweise in die Innenwand eindringen kann, die sich dabei verformt und kinetische Energie aufnimmt. Die derart ausgebildete Innenwand ermöglicht eine Relativbewegung des Gepäckstücks gegenüber dem Gepäckstückaufnahmebehälter, so dass es zu einer phasenverschobenen Krafteinleitung über den Gepäckstückaufnahmebehälter auf das Kraftfahrzeug kommt.

Erfindungsgemäß wird ferner vorgeschlagen, dass die Entkopplungseinrichtung durch eine an dem Gepäckstückaufnahmebehälter in einem Einfüllbereich befestigte, nach unten hin frei hängende Hängevorrichtung gebildet ist, in die das Gepäckstück einlegbar und frei hängend transportierbar ist. Dabei ist eine Lösung günstig, bei der die Hängevorrichtung als elastisches Stoffnetz oder elastische Gummiwanne realisiert ist. Die Ausführungsvariante entspricht einer Art "Hängematte" für das Gepäckstück innerhalb dem Gepäckstückaufnahmebehälter, so dass Relativbewegungen realisierbar sind. Die Beweglichkeit wird begrenzt durch entsprechende Halterungen oder eine Kombination mit einer Auskleidung der Innenwand des Gepäckstückaufnahmebehälters.

In einer vorteilhaften Ausführung und generell auf alle beschriebenen Ausführungen anwendbar erfolgt die Aufnahme des Gepäckstücks durch die Entkopplungseinrichtung formschlüssig oder kraftschlüssig mit Vorspannung in dem Gepäckstückaufnahmebehälter.

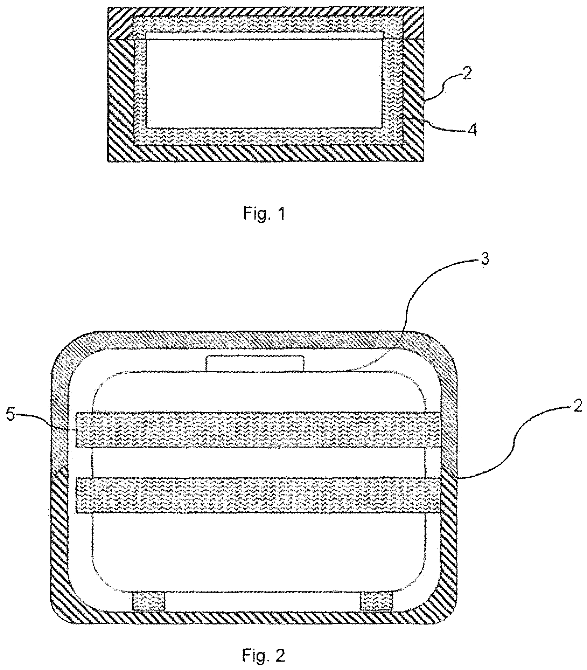

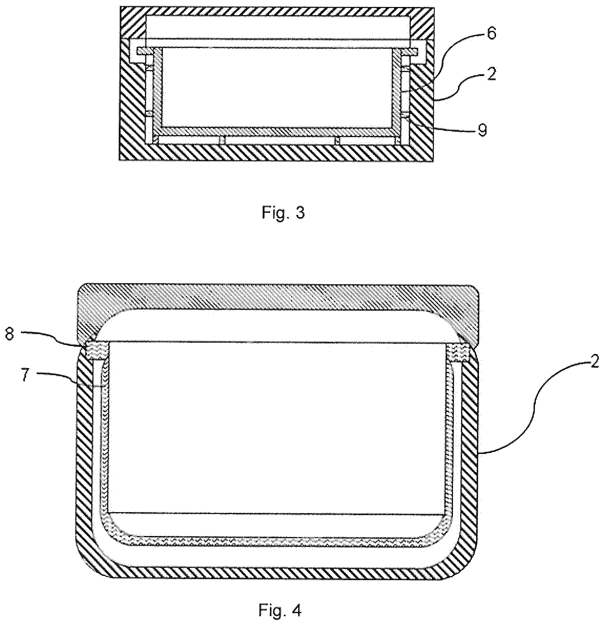

Andere vorteilhafte Weiterbildungen der Erfindung werden nachstehend zusammen mit der Beschreibung der bevorzugten Ausführung der Erfindung anhand der Figuren näher dargestellt, wobei die Lösungen gemäß den Figuren 1 und 4 kombiniert miteinander eine Ausführungsform der Erfindung darstellen.

Es zeigen:
- Fig. 1: eine schematische Darstellung eines Gepäcksystems in einer ersten Ausführungsform in einer seitlichen Schnittdarstellung;
- Fig. 2: eine schematische Darstellung eines Gepäcksystems in einer zweiten Ausführungsform in einer seitlichen Schnittdarstellung;
- Fig. 3: eine schematische Darstellung eines Gepäcksystems in einer dritten Ausführungsform in einer seitlichen Schnittdarstellung; und
- Fig. 4: eine schematische Darstellung eines Gepäcksystems in einer vierten Ausführungsform in einer seitlichen Schnittdarstellung.

Figur 1 zeigt eine schematische Darstellung eines Gepäcksystems in einer Ausführungsform in einer seitlichen Schnittdarstellung, wobei in einem als Gepäckkoffer ausgebildeten Gepäckstückaufnahmebehälter 2 innenseitig eine elastische oder teilelastisch deformierbare Wand 4 aus Schaumstoff gebildet ist, gegen die das nicht dargestellte Gepäckstück (beispielsweise ein Koffer, eine Tasche oder ein Caddy) bei Einflüssen von Fliehkraft gedrückt wird. Die Wand entkoppelt hierdurch das Gepäckstück von dem Gepäckstückaufnahmebehälter 2.

Figur 2 zeigt die Entkopplungseinrichtung gelöst mittels einer nicht erfindungsgemäßen Pufferleiste 5, welche das als Koffer ausgebildete Gepäckstück 3 fixierend in dem Gepäckstückaufnahmebehälter 2 aufnimmt, gleichzeitig jedoch eine Pufferfunktion zur Entkopplung gegenüber dem Gepäckstück 3 mit sich bringt. Die Pufferleiste 5 ist in der gezeigten Ausführung seitlich umlaufend und unterseitig bereit gestellt. Die Oberseitige Entkopplung kann über den Griff des Gepäckstücks erfolgen.

In Figur 3 ist eine ebenfalls nicht erfindungsgemäße Entkopplungseinrichtung durch eine in dem Gepäckstückaufnahmebehälter 2 angeordnete in Fahrtrichtung und in Querrichtung dazu beweglich aufgenommene Wanne 6 gebildet. In Randbereichen des Gepäckstückaufnahmebehälters 2 sind eine Vielzahl von dämpfenden Puffern 9 verteilt, welche eine Relativbewegung der Wanne 6 und mithin zwischen dem Gepäckstückaufnahmebehälter 2 und einem Gepäckstück dämpfen und beschränken. Die Wanne 6 kann aus Kunststoff, Gummi oder einem Stoffgewebe gebildet werden.

Figur 4 zeigt eine Ausführungsform, bei der die Entkopplungseinrichtung durch eine an dem Gepäckstückaufnahmebehälter 2 im Einfüllbereich über eine Randbefestigung 8 montierte, nach unten hin frei hängende Hängevorrichtung 7 gebildet ist, in die das Gepäckstück einlegbar und frei hängend transportierbar ist. Die Hängevorrichtung 7 ist in der gezeigten Ausführung eine Gummiwanne mit einer zum Gepäckstückaufnahmebehälter 2 komplementären Form. Die Randbefestigung 8 hält die Hängevorrichtung 7 in Position, jedoch ermöglicht eine Elastizität oder Teilelastizität der Wanne eine Entkopplung von dem Gepäckstückaufnahmebehälter 2.

In einer erfindungsgemäßen Ausführungsform sind die Lösungen der Figuren 1 und 4 miteinander kombiniert der gezeigten Ausführung eine Gummiwanne mit einer zum Gepäckstückaufnahmebehälter 2 komplementären Form. Die Randbefestigung 8 hält die Hängevorrichtung 7 in Position, jedoch ermöglicht eine Elastizität oder Teilelastizität der Wanne eine Entkopplung von dem Gepäckstückaufnahmebehälter 2.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise können Lösungen der Figuren 1 und 4 oder 1 und 2 miteinander kombiniert werden.

## Patentansprüche

1. Gepäcksystem geeignet für ein einspuriges Kraftfahrzeug, insbesondere für ein Motorrad oder einen Motorroller, mit einem an dem Kraftfahrzeug befestigbaren Gepäckstückaufnahmebehälter (2), der im Inneren eine mit einem aufzunehmenden Gepäckstück (3) zusammenwirkende Entkopplungseinrichtung zur zumindest teilweisen Entkopplung von fahrtbedingten Kräften des Gepäckstücks (3) von dem Gepäckstückaufnahmebehälter (2) umfasst, wobei die Entkopplungseinrichtung durch eine Ausbildung einer Innenwand des Gepäckstückaufnahmebehälters (2) als elastische deformierbare Wand (4) mit Hohlräumen, in Sandwichbauweise oder Schaumstoff gebildet ist, **dadurch gekennzeichnet, dass** die Entkopplungseinrichtung außerdem durch eine an dem Gepäckstückaufnahmebehälter (2) in einem Einfüllbereich befestigte, nach unten hin frei hängende Hängevorrichtung (7) gebildet ist, in die das Gepäckstück (3) einlegbar und frei hängend transportierbar ist, wobei
die Hängevorrichtung (7) als elastisches Stoffnetz oder elastische Gummiwanne ausgebildet ist.

2. Gepäcksystem nach Anspruch 1, **dadurch gekennzeichnet, dass** das Gepäckstück (3) durch die Entkopplungseinrichtung formschlüssig oder kraftschlüssig in dem Gepäckstückaufnahmebehälter (2) aufnehmbar ist.

## Claims

1. A luggage system suitable for a single-track motor vehicle, especially for a motorcycle or a motor scooter, with a luggage holding container (2) which can be fastened on the motor vehicle and which comprises in the interior a decoupling means, cooperating with an item of luggage (3) which is to be held, for at least partially decoupling travel-induced forces of the item of luggage (3) from the luggage holding container (2), wherein the decoupling means is formed by a formation of an inner wall of the luggage holding container (2) as an elastic deformable wall (4) with cavities, in a sandwich construction or foam material, **characterised in that**
the decoupling means is furthermore formed by a hanging device (7) which is fastened to the luggage holding container (2) in a filling region and hangs freely downwards, into which the item of luggage (3) can be placed and can be transported in a freely hanging state, wherein
the hanging device (7) is designed as an elastic material net or elastic rubber tub.

2. A luggage system according to Claim 1, **characterised in that** the item of luggage (3) can be held in the luggage holding container (2) in positive manner or in non-positive manner by the decoupling means.

## Revendications

1. Système de bagage pour un véhicule à moteur, monotrace, notamment pour une moto ou un deux roues comportant un réceptacle pour recevoir des bagages (2), qui se fixe au véhicule et comporte à l'intérieur, une installation de découplage coopérant avec un bagage (3) reçu pour découpler au moins partiellement les efforts exercés pendant la circulation, par l'élément de bagage (3) sur le réceptacle de bagage (2), l'installation de découplage étant formée par la paroi intérieure du réceptacle à bagage (2) réalisée comme paroi (4) déformable élastiquement avec des cavités, par une structure en sandwich ou une mousse,
système **caractérisé en ce que**
l'installation de découplage est formée en outre, par un dispositif de suspension (7) accroché librement vers l'arrière dans la zone de remplissage, dispositif dans lequel on place l'élément (2) bagage (3) et on le transporte suspendu librement,
le dispositif de suspension (7) étant réalisé sous la forme d'un filet élastique ou d'une cuvette élastique en caoutchouc.

2. Système de bagage selon la revendication 1,
**caractérisé en ce que**
l'élément de bagage (3) est reçu par l'installation de découplage dans le réceptacle à bagage (2) par une liaison par le forme ou par la force.
